# EUROPÄISCHE PATENTSCHRIFT

(11) **EP 3 631 238 B1**
(45) Veröffentlichungstag und Bekanntmachung des Hinweises auf die Patenterteilung: **04.01.2023**
(21) Anmeldenummer: 18727135.8
(22) Anmeldetag: 04.05.2018
(51) Int. Cl.: F16F 15/12, F16F 15/121

(54) **TORSIONSSCHWINGUNGSDÄMPFER MIT DREHMOMENTBEGRENZER**
TORSIONAL VIBRATION DAMPER WITH TORQUE LIMITER
AMORTISSEUR D'OSCILLATIONS DE TORSION COMPORTANT UN LIMITEUR DE COUPLE DE ROTATION

(30) Priorität: 23.05.2017 DE 102017111185
(43) Veröffentlichungstag der Anmeldung: 08.04.2020
(73) Patentinhaber: Schaeffler Technologies AG & Co. KG, 91074 Herzogenaurach (DE)
(72) Erfinder: HÄSSLER, Martin, 76676 Graben-Neudorf (DE); RUSCH, Alain, 67760 Gambsheim (FR); THERIOT, Laurent, 67000 Strasbourg (FR)
(86) Internationale Anmeldenummer: PCT/DE2018/100428
(87) Internationale Veröffentlichungsnummer: WO 2018/215018

(56) Entgegenhaltungen:
- EP-A1- 0 474 035
- EP-A1- 2 618 015
- WO-A1-2004/016968
- DE-A1-102015 211 899

## Beschreibung

Die Erfindung betrifft einen Torsionsschwingungsdämpfer mit Drehmomentbegrenzer gemäß dem Anspruch 1, insbesondere für eine Kupplungsscheibe innerhalb eines Antriebsstrangs eines Kraftfahrzeugs.

Zudem betrifft die Erfindung eine Kupplungsscheibe mit dem erfindungsgemäßen Torsionsschwingungsdämpfer zur Anordnung innerhalb eines Antriebstrangs eines Kraftfahrzeugs.

Des Weiteren betrifft die Erfindung ein Schwungrad mit einer den erfindungsgemäßen Torsionsschwingungsdämpfer aufweisenden Kupplungsscheibe. Torsionsschwingungsdämpfer sind allgemein bekannt und werden in der Regel zwischen einer Kurbelwelle eines Verbrennungsmotors und einer Antriebswelle eines Kraftfahrzeugs angeordnet. Durch den Takt des Verbrennungsmotors wird die Kurbelwelle mit periodischen Störungen angeregt. Damit diese nicht auf den Antriebsstrang übertragen werden, ist ein Torsionsschwingungsdämpfer vorgesehen, der die in verschiedenen Betriebssituationen auftretenden störenden Schwingungsresonanzen in einen Drehzahlbereich möglichst unterhalb der Betriebsdrehzahlen verschiebt. Im Betriebsdrehzahlbereich verbleibende Schwingungsresonanzen können über eine integrierte Reibeinrichtung gedämpft werden.

Um den Antriebsstrang vor Übermomenten bei Impacts zu schützen, ist der Torsionsschwingungsdämpfer in einigen Anwendungen mit einer Überlastkupplung ausgestattet, die typischerweise als in Reihe geschaltete Reibungskupplung ausgeführt ist, welche bei Überschreiten eines bestimmten Drehmoments durchrutscht und die Energie der Impacts aufnimmt.

Aus der EP 1 602 854 A2 ist beispielsweise eine Vorrichtung zum Absorbieren von Drehmomentschwankungen bekannt. Die Vorrichtung ist zwischen einer Kurbelwelle eines Motors und einer Eingangswelle auf der angetriebenen Seite angeordnet. Die Kurbelwelle ist mit einem Schwungrad verbunden, auf der eine Dämpfereinheit ausgebildet ist, die Reibbeläge aufweist. Die Eingangswelle weist ein Paar von Antriebsplatten, eine zwischen den Antriebsplatten angetriebene Platte und einen Federdämpfer auf. Die Dämpfereinheit greift mit den Reibbelägen zwischen die Antriebsplatten, und der Federdämpfer übt eine Federkraft auf die Reibbeläge aus, wobei die Reibbeläge durchrutschen können, wenn sie mindestens eine vorgegebene Drehmomentgröße aufnehmen, wodurch das Drehmoment begrenzt bzw. Impacts aufgenommen werden.

Die Präzision, mit der sich das gewünschte Auslösemoment des Drehmomentbegrenzers einstellen lässt, ist begrenzt durch die Anpresskraft des Federdämpfers und der Steifigkeit der den Federdämpfer aufnehmenden Teile.

Weiterhin ist aus der DE 10 2015 211 899 A1 ein Torsionsschwingungsdämpfer mit einem um eine Drehachse angeordneten Eingangsteil und einem gegenüber dem Eingangsteil um die Drehachse begrenzt entgegen der Wirkung einer Federeinrichtung verdrehbaren Ausgangsteil bekannt. Die Umsetzung der Relativverdrehung innerhalb des Torsionsschwingungsdämpfers in eine axiale Betätigung der Federeinrichtung beruht ausschließlich auf freien Bewegungen zwischen Bauteilen mit abrollenden Kontakten. Der Torsionsschwingungsdämpfer erlaub bei gegebener Kapazität der Federeinrichtung durch eine Variation von Übersetzungen unterschiedliche Torsionskennlinien abzubilden, die jeweils die volle Kapazität der Energiespeicher ausnutzen. Das Auslösen eines Drehmomentbegrenzers wird jedoch nicht beschrieben.

Es besteht ein regelmäßiges Bedürfnis, Torsionsschwingungsdämpfer mit einem Drehmomentbegrenzer weiterzuentwickeln, um das Auslösemoment präziser einstellen zu können. Zudem besteht ein regelmäßiges Bedürfnis, Herstellungskosten zu reduzieren und den Aufbau eines Torsionsschwingungsdämpfers mit einem Drehmomentbegrenzer zu vereinfachen.

Ferner ist aus der WO 2004/016968 A1 ein Torsionsschwingungsdämpfer bekannt, der auf den Oberbegriff des Anspruchs 1 lesbar ist.

Es ist die Aufgabe der Erfindung einen Torsionsschwingungsdämpfer mit einem Drehmomentbegrenzer bereitzustellen, wobei das Auslösemoment des Drehmomentbegrenzers in einfacher Weise einstellbar ist. Zudem ist es die Aufgabe einen Torsionsschwingungsdämpfer mit einem Drehmomentbegrenzer anzugeben, der einen reduzierten Bauraum und reduzierte Herstellungskosten aufweisen kann.

Die Lösung der Aufgabe erfolgt erfindungsgemäß durch einen Torsionsschwingungsdämpfer mit einem Drehmomentbegrenzer mit den Merkmalen des Anspruchs 1, durch eine Kupplungsscheibe mit den Merkmalen des Anspruchs 7, und durch ein Schwungrad mit einer den erfindungsgemäßen Torsionsschwingungsdämpfer aufweisenden Kupplungsscheibe gemäß dem Merkmal des Anspruchs 8. Bevorzugte Ausgestaltungen der Erfindung sind in den Unteransprüchen und der nachfolgenden Beschreibung angegeben, die jeweils einzeln oder in Kombination einen Aspekt der Erfindung darstellen können. Dabei können alle Kombinationen wie auch vereinzelte Kombinationen zwischen den Merkmalen des Torsionsschwingungsdämpfers, der Kupplungsscheibe und dem Schwungrad mit Kupplungsscheibe zusammen genutzt werden. Weiterhin ist es jeweils auch vorgesehen und möglich, einzelne oder mehrere Merkmale des Torsionsschwingungsdämpfers, der Kupplungsscheibe und dem Schwungrad mit Kupplungsscheibe beliebig zu kombinieren.

Erfindungsgemäß ist ein Torsionsschwingungsdämpfer mit Drehmomentbegrenzer, insbesondere für eine Kupplungsscheibe innerhalb eines Antriebstrangs eines Kraftfahrzeugs vorgesehen, mit einem um eine Drehachse drehbar gelagerten Eingangsteil und einem gegenüber dem Eingangsteil um die Drehachse begrenzt entgegen der Wirkung einer Federeinrichtung verdrehbar angeordneten Ausgangsteil, wobei zwischen dem Eingangsteil und dem Ausgangsteil zumindest zwei momentübertragende Zwischenelemente mittels Kurvengetrieben bei einer Relativverdrehung von Eingangsteil und Ausgangsteil radial verlagernd angeordnet sind, wobei durch die Ausgestaltung der Kurvengetriebe und/oder eine Ausbildung der Federeinrichtung bei einer Relativverdrehung zwischen dem Eingangsteil und dem Ausgangsteil eine Torsionskennlinie eines Antriebsmoments über den Verdrehwinkel ausgebildet ist, die eine Dämpferstufe und eine an die Dämpferstufe angrenzende Endstufe aufweist, wobei die Dämpferstufe eine Dämpferkapazität des Antriebsmoments über den Verdrehwinkel angibt, und die Endstufe eine Drehmomentbegrenzung des Antriebsmoments über den Verdrehwinkel umfasst.

Es ist somit ein Aspekt der Erfindung, dass der Torsionsschwingungsdämpfer mit Drehmomentbegrenzer ein um eine Drehachse drehbar gelagertes Eingangsteil und ein gegenüber dem Eingangsteil um die Drehachse begrenzt entgegen der Wirkung einer Federeinrichtung verdrehbar angeordnetes Ausgangsteil aufweist. Das Eingangsteil kann vorzugsweise mit einem auf einer Antriebswelle eines Kraftfahrzeugs angeordneten Schwungrad in Wirkverbindung stehen. Insbesondere kann das Eingangsteil vorzugsweise fest mit dem Schwungrad verbunden sein. Die Antriebswelle kann vorzugsweise eine Kurbelwelle sein. Das Ausgangsteil ist vorzugsweise mit einer Antriebswelle eines Kraftfahrzeuggetriebes gekoppelt bzw. fest verbunden. Zwischen dem Eingangsteil und dem Ausgangsteil sind zumindest zwei momentübertragende Zwischenelemente angeordnet, die mittels Kurvengetriebe bei einer Relativverdrehung von Eingangsteil und Ausgangsteil radial verlagernd ausgebildet sind. Bei einer Relativverdrehung zwischen dem Eingangsteil und dem Ausgangsteil wird durch die Ausgestaltung der Kurvengetriebe und/oder Ausbildung der Federeinrichtung eine Torsionskennlinie eines Antriebsmoments über den Verdrehwinkel ausgebildet. Die Torsionskennlinie weist eine Dämpferstufe und eine an die Dämpferstufe angrenzende Endstufe auf, wobei die Dämpferstufe eine Dämpferkapazität des Antriebsmoments über den Verdrehwinkel angibt, und die Endstufe eine Drehmomentbegrenzung des Antriebsmoments über den Verdrehwinkel umfasst. Das heißt, durch die Ausgestaltung der Kurvengetriebe und/oder Ausbildung der Federeinrichtung erfolgt bei einer Relativverdrehung zwischen dem Eingangsteil und dem Ausgangsteil in der Dämpferstufe einen Drehmomentübertragung über den Verdrehwinkel in Abhängigkeit der Torsionskennlinie. Die Endstufe beginnt durch das Erreichen des Auslösemoments, also eines vordefinierten Schwellenwerts, wobei die Drehmomentübertragung bei zunehmenden Verdrehwinkel begrenzt wird, wodurch vorzugsweise Impacts aufgenommen werden können. Das Auslösemoment der Drehmomentübertragung kann somit durch die Ausbildung der Kurvengetriebe und/oder Ausbildung der Federeinrichtung präzise angegeben werden. Zudem kann der Bauraum reduziert werden, da eine Drehmomentbegrenzung vorzugsweise durch die Ausbildung der Kurvengetriebe erfolgen kann. Somit können auch Herstellungskosten reduziert werden.

Eine bevorzugte Weiterbildung der Erfindung liegt darin, dass die Torsionskennlinie der Endstufe einen über den Verdrehwinkel abfallenden, konstanten und/oder leicht ansteigenden Momentenverlauf umfasst. Die Kurvengetriebe weisen demnach nach Erreichen des Auslösemoments, also beim Übergang in die Endstufe, eine Übersetzung auf, so dass bei weiterer Verdrehung zwischen Eingangsteil und Ausgangsteil und einer weiteren Einfederung der Federeinrichtung ein Anstieg des übertragenden Antriebsmoments reduziert und/oder vermieden werden kann. Das übertragene Moment wird vorzugsweise über den Verdrehwinkel der Endstufe zurückgeführt, konstant gehalten und/oder leicht ansteigend gestaltet, jeweils in der Weise, dass die Energie von Impacts in den Federelementen des Torsionsschwingungsdämpfers aufgenommen werden kann. Bei einem leicht ansteigenden Momentenverlauf ist die Momentensteigerung vorzugsweise kleiner als 50% der höchsten Momentensteigerung in der Dämpfungsstufe.

Die Kurvengetriebe sind jeweils aus radial wirksamen Rampeneinrichtungen ausgebildet, wobei die Rampeneinrichtungen in Zugrichtung und in Schubrichtung jeweils zwei aneinander angrenzende, voneinander verschiedene Konturen aufweisen. Dies bedeutet, dass die Rampeneinrichtungen ausgehend von einer Neutralstellung in Zugrichtung und in Schubrichtung jeweils zwei aneinander angrenzende und voneinander verschiedene Konturen aufweisen. Somit kann vorzugsweise durch die Ausgestaltung der Rampeneinrichtung der Kurvengetriebe die Übersetzung des Kurvengetriebes ausgebildet werden.

In diesem Zusammenhang liegt eine vorteilhafte Weiterbildung der Erfindung darin, dass die aneinander angrenzenden Konturen eine lineare, konvexe und/oder konkave Ausgestaltung aufweisen und/oder in Freiform ausgebildet sind. Vorzugsweise kann die erste Kontur in Zugrichtung eine konkave Ausgestaltung und die an die erste Kontur angrenzende zweite Kontur eine lineare Ausgestaltung aufweisen. Ebenso ist es denkbar, dass die erste Kontur und die zweite Kontur eine lineare Ausgestaltung aufweisen, wobei die Steigung der linearen ersten Kontur verschieden von der Steigung der linearen zweiten Kontur ist.

Gemäß einer bevorzugten Weiterbildung der Erfindung ist vorgesehen, dass der Übergang zwischen den aneinander angrenzenden Konturen der Rampeneinrichtung in Zugrichtung und/oder Schubrichtung das Auslösemoment ausbildet und/oder definiert. Auf diese Weise kann über den Übergang zwischen den Konturen das Auslösemoment präzise festgelegt werden. Über die Ausgestaltung der zweiten Kontur kann somit die Übersetzung des Kurvengetriebes festgelegt werden, so dass die Torsionskennlinie der Endstufe, also nach Erreichen bzw. Überschreiten des Auslösemoments, einen über den Verdrehwinkel abfallenden, konstanten und/oder leicht ansteigenden Momentenverlauf aufweist.

Zwischen zueinander komplementären Konturen einer Rampeneinrichtung eines Kurvengetriebes ist jeweils ein Wälzkörper angeordnet. Der Wälzkörper ist vorzugsweise als frei abrollendes, rollenförmiges Wälzelement ausgebildet, das zur axialen Sicherung vorzugsweise eine zumindest teilweise umlaufende Ringborde an den jeweiligen Enden aufweisen kann. Auf diese Weise kann eine Relativverdrehung zwischen dem Eingangsteil und Ausgangsteil vorzugsweise über die Konturen der Rampeneinrichtung in den Kurvengetriebe mit den jeweiligen in den Kurvengetrieben zwischen zwei komplementären Konturen angeordneten frei abrollenden Wälzkörpern in eine Bewegung der Zwischenelemente übersetzt werden, wodurch die Federelemente - für Zug- und Schubbelastung gleichermaßen - parallel und rein axial betätigt werden können. Das für die Bewegung erforderliche Torsionsmoment wird über die jeweilige Kontur der Rampeneinrichtung und Wälzkörper zunächst vom Eingangsteil auf die Zwischenelemente und anschließend über die jeweiligen Kontur und Wälzkörper von den Zwischenelementen auf das Ausgangsteil übertragen.

Grundsätzlich können die Konturen der Rampeneinrichtung in Zug- und Schubrichtung gleich ausgebildet sein. Eine bevorzugte Weiterbildung der Erfindung liegt darin, dass die Konturen der Rampeneinrichtung in Zug- und Schubrichtung voneinander verschieden ausgebildet sind. Auf diese Weise können in Zugrichtung und in Schubrichtung unterschiedliche Torsionskennlinien erzeugt werden.

Die Erfindung betrifft zudem eine Kupplungsscheibe zur Anordnung innerhalb eines Antriebstrangs eines Kraftfahrzeugs mit dem erfindungsgemäßen Torsionsschwingungsdämpfer mit Drehmomentbegrenzer.

Die Kupplungsscheibe ist vorzugsweise zwischen einer Antriebswelle eines Kraftfahrzeugs, vorzugsweise einer Kurbelwelle, und einer Antriebswelle eines Kraftfahrzeuggetriebes angeordnet. Besonders bevorzugt ist die Kupplungsscheibe zwischen einem auf der Kurbelwelle angeordneten Schwungrad und der Antriebswelle des Kraftfahrzeuggetriebes angeordnet.

In einer bevorzugten Weiterbildung der Erfindung ist vorgesehen, dass das Eingangsteil des Torsionsschwingungsdämpfers drehfest mit dem Schwungrad verbunden ist. Eine drehfeste Verbindung zwischen dem Eingangsteil und dem Schwungrad kann vorzugsweise über eine Schraubverbindung und/oder Nietverbindung hergestellt werden. Es ist jedoch auch denkbar, dass auf eine andere Art und Weise eine drehfeste Verbindung zwischen dem Eingangsteil und den Schwungrad hergestellt werden kann. Das Ausgangsteil ist vorzugsweise drehfest mit der Antriebswelle des Kraftfahrzeuggetriebes gekoppelt. Bei einer Relativverdrehung zwischen dem Eingangsteil und dem Ausgangsteil, insbesondere bei einem Impact, also größeren Stößen bei Drehzahlunterschieden zwischen der Kurbelwelle und der Antriebswelle des Kraftfahrzeuggetriebes, rutscht das Eingangsteil nicht durch, wie dies bei einer Rutschkupplung üblich ist. Zwischen dem Eingangsteil und dem Ausgangsteil sind zumindest zwei momentübertragende Zwischenelemente angeordnet, die mittels Kurvengetriebe bei einer Relativverdrehung von Eingangsteil und Ausgangsteil radial verlagernd ausgebildet sind. Bei einer Relativverdrehung zwischen dem Eingangsteil und dem Ausgangsteil wird durch die Ausgestaltung der Kurvengetriebe und/oder Ausbildung der Federeinrichtung eine Torsionskennlinie eines Antriebsmoments über den Verdrehwinkel ausgebildet. Die Torsionskennlinie weist eine Dämpferstufe und eine an die Dämpferstufe angrenzende Endstufe auf, wobei die Dämpferstufe eine Dämpferkapazität des Antriebsmoments über den Verdrehwinkel angibt, und die Endstufe eine Drehmomentbegrenzung des Antriebsmoments über den Verdrehwinkel umfasst. Das heißt, durch die Ausgestaltung der Kurvengetriebe und/oder Ausbildung der Federeinrichtung erfolgt bei einer Relativverdrehung zwischen dem Eingangsteil und dem Ausgangsteil in der Dämpferstufe einen Drehmomentübertragung über den Verdrehwinkel in Abhängigkeit der Torsionskennlinie. Die Endstufe beginnt durch das Erreichen des Auslösemoments, also eines vordefinierten Schwellenwerts, wobei die Drehmomentübertragung bei zunehmenden Verdrehwinkel begrenzt wird, wodurch die Impacts aufgenommen werden können. Das Auslösemoment der Drehmomentübertragung kann somit durch die Ausbildung der Kurvengetriebe und/oder Ausbildung der Federeinrichtung präzise angegeben werden.

Die Erfindung betrifft zudem ein Schwungrad mit einer den erfindungsgemäßen Torsionsschwingungsdämpfer aufweisenden Kupplungsscheibe, wobei das Eingangsteil des Torsionsschwingungsdämpfers drehfest mit dem Schwungrad verbindbar und/oder verbunden ist. Auf diese Weise ist die Kupplungsscheibe nicht als Rutschkupplung mit dem Schwungrad gekoppelt. Über die drehfeste Verbindung des Eingangsteils mit dem Schwungrad liegt vorzugsweise eine kraftschlüssige drehfeste Verbindung vor. Die drehfeste Verbindung kann vorzugsweise eine Schraubverbindung und/oder Nietverbindung sein. Es sind jedoch auch andere Verbindungsmöglichkeiten denkbar, über die eine drehfeste Verbindung zwischen dem Schwungrad und dem Eingangsteil herstellbar ist.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1 einen Torsionsschwingungsdämpfer mit Drehmomentbegrenzer in schematischer Darstellung, gemäß einem bevorzugten Ausführungsbeispiel der Erfindung,
Fig. 2 ein Kurvengetriebe in schematischer Darstellung, gemäß einem bevorzugten Ausführungsbeispiel der Erfindung,
Fig. 3 eine Ausführungsform einer Torsionskennlinie mit Endstufe, gemäß einem bevorzugten Ausführungsbeispiel der Erfindung,
Fig. 4 eine weitere Ausführungsform einer Torsionskennlinie mit Endstufe, gemäß einem bevorzugten Ausführungsbeispiel der Erfindung,
Fig. 5 eine weitere Ausführungsform einer Torsionskennlinie mit Endstufe, gemäß einem bevorzugten Ausführungsbeispiel der Erfindung.

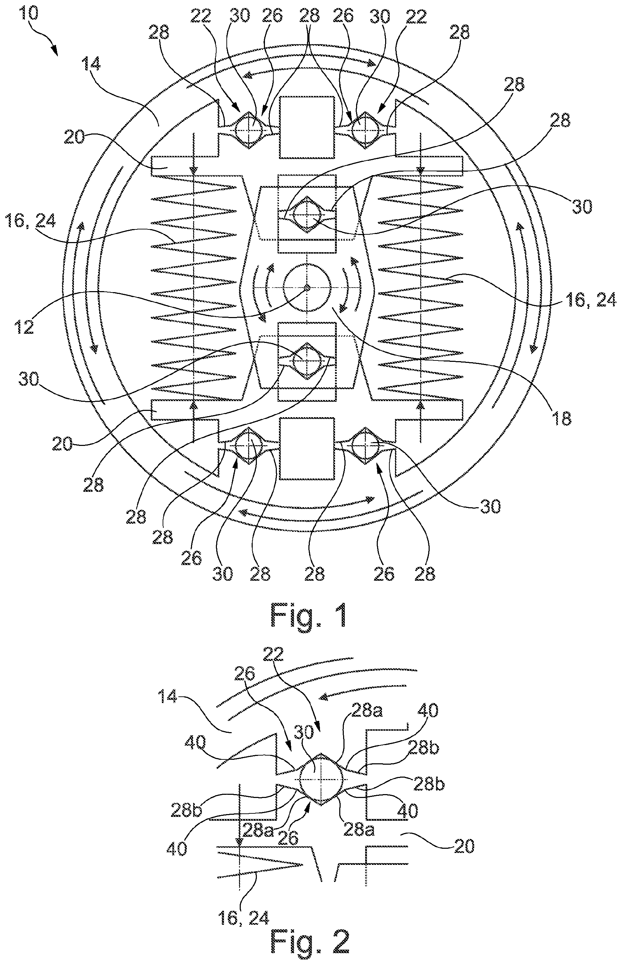

In Fig. 1 ist ein Torsionsschwingungsdämpfer 10 mit Drehmomentbegrenzer in einer schematischen Darstellung gezeigt. Der Torsionsschwingungsdämpfer 10 umfasst ein um eine Drehachse 12 verdrehbar gelagertes Eingangsteil 14 und ein gegenüber dem Eingangsteil 14 um die Drehachse 12 begrenzt entgegen der Wirkung einer Federeinrichtung 16 verdrehbar angeordnetes Ausgangsteil 18. Zwischen dem Eingangsteil 14 und dem Ausgangsteil 18 sind zwei momentübertragende Zwischenelemente 20 angeordnet, die jeweils über Kurvengetriebe 22 mit dem Eingangsteil 14 und dem Ausgangsteil 18 gekoppelt sind und bei einer Relativverdrehung von Eingangsteil 14 und Ausgangsteil 18 radial verlagernd ausgebildet sind. Zwischen den Zwischenelementen 20 ist die Federeinrichtung 16 angeordnet, die wenigsten zwei zueinander beabstandet angeordnete Federelemente 24 bzw. Energiespeicher umfasst.

Das Eingangsteil 14 ist somit über die Zwischenelemente 20 mit dem Ausgangsteil 18 gekoppelt, wobei zwischen dem Eingangsteil 14 und dem jeweiligen Zwischenelement 20 zwei Kurvengetriebe 22 ausgebildet sind und das Ausgangsteil mit dem jeweiligen Zwischenelement 20 über ein Kurvengetriebe 22 gekoppelt ist. Die jeweiligen Kurvengetriebe 22 sind gleich aufgebaut, wobei exemplarisch ein Kurvengetriebe 22 zwischen dem Eingangsteil 14 und dem Zwischenelement 20 näher beschrieben wird und in Fig. 2 im Detail gezeigt wird.

Das Kurvengetriebe 22 wird durch eine an dem Eingangsteil 14 und an dem Zwischenteil 20 ausgebildete zueinander komplementär angeordnete Rampeneinrichtungen 26 ausgebildet, wobei die jeweilige Rampeneinrichtung 26 in Zugrichtung und in Schubrichtung jeweils zwei aneinander angrenzende, voneinander verschiedene Konturen 28, also eine erste Kontur 28a und eine zweite Kontur 28b, aufweist, und zwischen den Rampeneinrichtungen 26 ein Wälzkörper 30 in Form eines rollenförmigen Wälzelements angeordnet ist.

Grundsätzlich können die aneinander angrenzenden Konturen 28 eine lineare, konvexe, konkave Ausgestaltung aufweisen oder in Freiform ausgebildet sind. Im vorliegenden Ausführungsbeispiel weisen die aneinander angrenzende erste Konturen 28a und die zweite Kontur 28b jeweils eine lineare Ausgestaltung mit jeweils unterschiedlichen Steigungen auf.

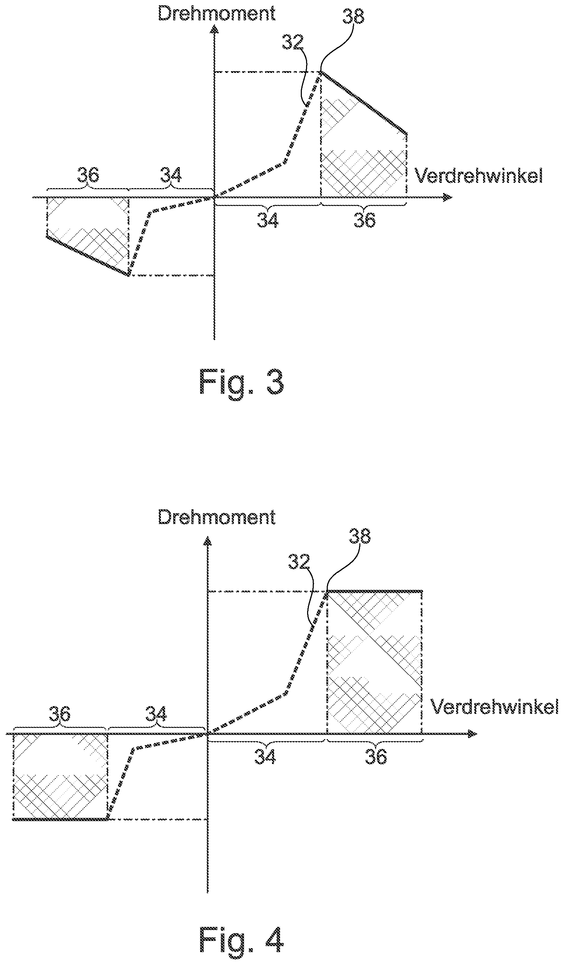

Bei einer Relativverdrehung zwischen dem Eingangsteil 14 und dem Ausgangsteil 18 wird durch die Ausgestaltung der Kurvengetriebe 22 und der Ausbildung der Federeinrichtung 16 eine Torsionskennlinie 32 eines Antriebsmoments über den Verdrehwinkel ausgebildet, wie dies vorzugsweise in den Fig. 3 bis 5 ersichtlich ist. Die Torsionskennlinie 32 weist eine Dämpferstufe 34 und eine an die Dämpferstufe 34 angrenzende Endstufe 36 auf, wobei die Dämpferstufe 34 eine Dämpferkapazität des Antriebsmoments über den Verdrehwinkel angibt, und die Endstufe 36 eine Drehmomentbegrenzung des Antriebsmoments über den Verdrehwinkel umfasst. Das heißt, durch die Ausgestaltung der Kurvengetriebe 22, insbesondere der Ausgestaltung der Konturen 28 der Rampeneinrichtung 26 der Kurvengetriebe 22 und der Ausbildung der Federeinrichtung 16 erfolgt bei einer Relativverdrehung zwischen dem Eingangsteil 14 und dem Ausgangsteil 18 in der Dämpferstufe 34 einen Drehmomentübertragung über den Verdrehwinkel in Abhängigkeit der Torsionskennlinie 32. Die Endstufe beginnt durch das Erreichen des Auslösemoments 38, wobei die Drehmomentübertragung bei zunehmenden Verdrehwinkel begrenzt wird, wodurch vorzugsweise Impacts aufgenommen werden können.

Der Übergang 40 zwischen den aneinander angrenzenden Konturen 28, insbesondere der ersten Kontur 28a und der zweiten Kontur 28b, der Rampeneinrichtung 26 in der Zugrichtung und/oder der Schubrichtung definiert vorzugsweise das Auslösemoment. Das Auslösemoment 38 der Drehmomentübertragung kann somit durch die Ausbildung der Kurvengetriebe 22 präzise angegeben werden.

In den Fig. 3 bis 5 sind Diagramme unterschiedlicher Torsionskennlinien 32 gezeigt, in denen das Drehmoment bzw. Antriebsmoment über den Verdrehwinkel des Eingangsteils 14 gegenüber dem Ausgangsteil 18 dargestellt ist. Die Torsionskennlinie 32 ist in Schubrichtung und Zugrichtung wirksam und weist einen zweistufige Dämpfungsstufe 34 und eine mit zunehmenden Verdrehwinkel an die Dämpfungsstufe 34 angrenzende einstufige Endstufe 36 auf. Die Schub- und Zugstufenausbildung der Torsionskennlinie erfolgt durch die jeweilige Ausbildung der Rampeneinrichtung 26, insbesondere der Konturen 28 und der Ausbildung der Federeinrichtung 16.

Die Dämpfungsstufe 34 weist eine weichere erste Federstufe und eine härtere zweite Federstufe auf. Nachdem ein Schwellenwert des Antriebsmoments, also das Auslösemoment 38, und eine vordefinierter Verdrehwinkel erreicht sind, erfolgt in der Endstufe 36 keine weitere bzw. signifikante Momentenzunahme. Die Kurvengetriebe weisen demnach nach Erreichen des Auslösemoments 38, also beim Übergang in die Endstufe 36, eine Übersetzung auf, so dass sich bei weiterer Verdrehung und weiterer Einfederung der Federeinrichtung 16 kein Anstieg des übertragenden Moments mehr ergibt. Das übertragene Drehmoment wird über den Verdrehwinkel der Endstufe 36 zurückgeführt, was durch den abfallenden Verlauf der Torsionskurve 32 in der Endstufe 36 dargestellt ist.

In Fig. 4 ist eine weitere Torsionskennlinie 32 gezeigt. Im Unterschied zu der in Fig. 3 gezeigten Torsionskennlinie 32 ist der Verlauf in der Endstufe 36 konstant.

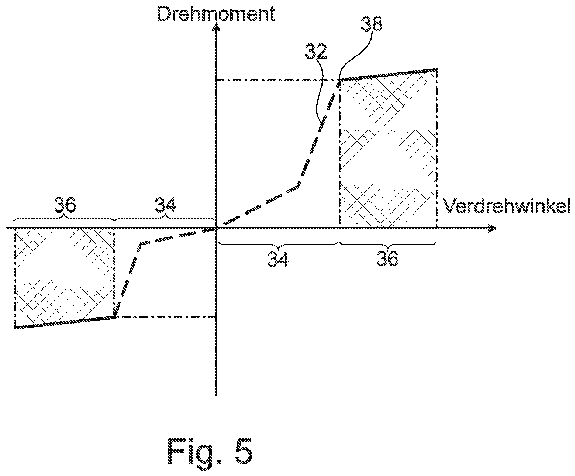

In Fig. 5 ist eine weitere Torsionskennlinie 32 gezeigt. Im Unterschied zu der in Fig. 3 gezeigten Torsionskennlinie 32 weist der Verlauf der Torsionskennlinie 32 in der Endstufe 36 einen über den Verdrehwinkel leicht ansteigenden Momentenverlauf auf. Bei einem leicht ansteigenden Momentenverlauf ist die Momentensteigerung kleiner als 50% der höchsten Momentensteigerung in der Dämpfungsstufe 34.

Das übertragene Drehmoment bzw. Antriebsmoment wird somit über den Verdrehwinkel der Endstufe 36 zurückgeführt, konstant gehalten und/oder leicht ansteigend gestaltet, jeweils in der Weise, dass die Energie von Impacts in den Federelementen 16 des Torsionsschwingungsdämpfers 10 aufgenommen werden kann.

## Patentansprüche

1. Torsionsschwingungsdämpfer (10) mit Drehmomentbegrenzer, insbesondere für eine Kupplungsscheibe innerhalb eines Antriebstrangs eines Kraftfahrzeugs, mit
einem um eine Drehachse (12) drehbar gelagerten Eingangsteil (14) und
einem gegenüber dem Eingangsteil (14) um die Drehachse (12) begrenzt entgegen der Wirkung einer Federeinrichtung (16) verdrehbar angeordneten Ausgangsteil (18), wobei
zwischen dem Eingangsteil (14) und dem Ausgangsteil (18) zumindest zwei momentübertragende Zwischenelemente (20) mittels Kurvengetrieben (22) bei einer Relativverdrehung von Eingangsteil (14) und Ausgangsteil (18) radial verlagernd angeordnet sind, wobei
durch die Ausgestaltung der Kurvengetriebe (22) und/oder eine Ausbildung der Federeinrichtung (16) bei einer Relativverdrehung zwischen dem Eingangsteil und dem Ausgangsteil eine Torsionskennlinie (32) eines Antriebsmoments über den Verdrehwinkel ausgebildet ist, die eine Dämpferstufe (34) und eine an die Dämpferstufe (34) angrenzende Endstufe (36) aufweist, wobei die Dämpferstufe (34) eine Dämpferkapazität des Antriebsmoments über den Verdrehwinkel angibt, und die Endstufe (36) eine Drehmomentbegrenzung des Antriebsmoments über den Verdrehwinkel umfasst, wobei die Kurvengetriebe (22) jeweils aus radial wirksamen Rampeneinrichtungen (26) ausgebildet sind, **dadurch gekennzeichnet, dass** die Rampeneinrichtungen (26) in Zugrichtung und in Schubrichtung jeweils zwei aneinander angrenzende, voneinander verschiedene Konturen (28) aufweisen, und zwischen zueinander komplementären Konturen (28) einer Rampeneinrichtung (26) eines Kurvengetriebes (22) ein Wälzkörper (30) angeordnet ist.

2. Torsionsschwingungsdämpfer nach Anspruch 1, **dadurch gekennzeichnet, dass** die Torsionskennlinie (32) der Endstufe (36) einen über den Verdrehwinkel abfallenden, konstanten und/oder leicht ansteigenden Momentenverlauf umfasst.

3. Torsionsschwingungsdämpfer nach Anspruch 1 oder 2, **dadurch gekennzeichnet, dass** die aneinander angrenzenden Konturen (28) eine lineare, konvexe und/oder konkave Ausgestaltung aufweisen und/oder in Freiform ausgebildet sind.

4. Torsionsschwingungsdämpfer nach einem der Ansprüche 1 bis 3, **dadurch gekennzeichnet, dass** der Übergang (40) zwischen den aneinander angrenzenden Konturen (28) der Rampeneinrichtung (26) in der Zugrichtung und/oder der Schubrichtung das Auslösemoment ausbildet.

5. Torsionsschwingungsdämpfer nach einem der Ansprüche 1 bis 4, **dadurch gekennzeichnet, dass** die Konturen (28) der Rampeneinrichtung (26) in Zug- und Schubrichtung voneinander verschieden ausgebildet sind.

6. Kupplungsscheibe zur Anordnung innerhalb eines Antriebstrangs eines Kraftfahrzeugs mit einem Torsionsschwingungsdämpfer (10) nach einem der vorhergehenden Ansprüche.

7. Schwungrad mit einer einen Torsionsschwingungsdämpfer aufweisenden Kupplungsscheibe nach Anspruch 6, wobei das Eingangsteil des Torsionsschwingungsdämpfers drehfest mit dem Schwungrad verbindbar und/oder verbunden ist.

## Claims

1. A torsional vibration damper (10) with a torque limiter, in particular for a clutch plate within a drive train of a motor vehicle, with an input part (14) rotatably mounted about a rotational axis (12), and
an output part (18) which is twistably arranged such that it can be rotated counter to the action of a spring device (16) to a limited extent about the rotational axis (12) relative to the input part (14), wherein
at least two torque-transmitting intermediate elements (20) are arranged between the input part (14) and the output part (18) so as to move radially by means of cam mechanisms (22) in the case of a relative rotation of the input part (14) and the output part (18), wherein,
in the case of a relative rotation between the input part and the output part, a torsional characteristic curve (32) of a drive torque over the rotary angle is configured by way of the configuration of the cam mechanisms (22) and/or a configuration of the spring device (16), which torsional characteristic curve has a damper stage (34) and an end stage (36) which adjoins the damper stage (34), wherein the damper stage (34) specifies a damper capacity of the drive torque over the rotary angle, and the end stage (36) comprises a torque limitation of the drive torque over the rotary angle, wherein the cam mechanisms (22) are each formed from radially effective ramp devices (26), **characterised in that** the ramp devices (26) each have two contours (28) that adjoin one another and differ from one another in the pulling direction and in the pushing direction, and a rolling element (30) is arranged between mutually complementary contours (28) of a ramp device (26) of a cam mechanism (22).

2. The torsional vibration damper according to claim 1, **characterised in that** the torsional characteristic curve (32) of the end stage (36) comprises a torque curve which falls, is constant and/or rises slightly over the angle of rotation.

3. The torsional vibration damper according to claim 1 or 2, **characterised in that** the contours (28) adjoining one another have a linear, convex and/or concave configuration and/or are formed in a free shape.

4. The torsional vibration damper according to one of claims 1 to 3, **characterised in that** the transition (40) between the contours (28) of the ramp device (26) adjoining one another in the pulling direction and/or the pushing direction forms the release torque.

5. The torsional vibration damper according to one of claims 1 to 4, **characterised in that** the contours (28) of the ramp device (26) are formed in different pulling and pushing directions to one another.

6. A clutch plate for arrangement inside a drive train of a motor vehicle having a torsional vibration damper (10) according to one of the preceding claims.

7. A flywheel with a clutch plate having a torsional vibration damper according to claim 6, wherein the input part of the torsional vibration damper is and/or can be connected to the flywheel in a torsionally fixed manner.

## Revendications

1. Amortisseur d'oscillations de torsion (10) comprenant un limiteur de couple de rotation, en particulier pour un disque d'embrayage dans un groupe motopropulseur d'un véhicule automobile, comprenant une pièce d'entrée (14) montée rotative autour d'un axe de rotation (12) et
une pièce de sortie (18) agencée en regard de la pièce d'entrée (14) et pouvant tourner autour de l'axe de rotation (12) de manière limitée contre l'action d'un dispositif de ressort (16), dans lequel
entre la pièce d'entrée (14) et la pièce de sortie (18) au moins deux éléments intermédiaires (20) à transmission de couple sont agencés de manière à se déplacer radialement au moyen de commandes à cames (22) lors d'une rotation relative de la pièce d'entrée (14) et de la pièce de sortie (18), dans lequel
par la conception des commandes à cames (22) et/ou une formation du dispositif de ressort (16) lors d'une rotation relative entre la pièce d'entrée et la pièce de sortie, une courbe caractéristique de torsion (32) d'un couple moteur est formée sur l'angle de rotation, qui présente un étage d'amortisseur (34) et un étage final (36) adjacent à l'étage d'amortisseur (34), l'étage d'amortisseur (34) spécifiant une capacité d'amortisseur du couple moteur sur l'angle de rotation et l'étage final (36) comprenant une limitation de couple de rotation du couple moteur sur l'angle de rotation, les commandes à cames (22) étant conçues respectivement à partir de dispositifs de rampe (26) à action radiale, **caractérisé en ce que** les dispositifs de rampe (26) présentent dans la direction de traction et la direction de poussée respectivement deux contours (28) différents l'un de l'autre, adjacents l'un à l'autre et un corps de roulement (30) est agencé entre des contours (28) complémentaires entre eux d'un dispositif de rampe (26) d'une commande à cames (22).

2. Amortisseur d'oscillations de torsion selon la revendication 1, **caractérisé en ce que** la courbe caractéristique de torsion (32) de l'étage final (36) comprend un diagramme de couple descendant, constant et/ou légèrement croissant sur l'angle de rotation.

3. Amortisseur d'oscillations de torsion selon la revendication 1 ou 2, **caractérisé en ce que** les contours (28) adjacents l'un à l'autre présentent une conception linéaire, convexe et/ou concave et/ou sont formés selon une forme libre.

4. Amortisseur d'oscillations de torsion selon l'une quelconque des revendications 1 à 3, **caractérisé en ce que** la transition (40) entre les contours (28) adjacents l'un à l'autre du dispositif de rampe (26) dans la direction de traction et/ou la direction de poussée, forme le couple de déclenchement.

5. Amortisseur d'oscillations de torsion selon l'une quelconque des revendications 1 à 4, **caractérisé en ce que** les contours (28) du dispositif de rampe (26) dans la direction de traction et de poussée sont formés de manière à être différents l'un de l'autre.

6. Disque d'embrayage destiné à être agencé dans un groupe motopropulseur d'un véhicule automobile comprenant un amortisseur d'oscillations de torsion (10) selon l'une quelconque des revendications précédentes.

7. Volant d'inertie comprenant un disque d'embrayage présentant un amortisseur d'oscillations de torsion selon la revendication 6, dans lequel la pièce d'entrée de l'amortisseur d'oscillations de torsion peut être reliée et/ou est reliée solidaire en rotation au volant d'inertie.
